# FASCICULE DE BREVET EUROPEEN

(11) **EP 3 691 463 B1**
(45) Date de publication et mention de la délivrance du brevet: **13.12.2023**
(21) Numéro de dépôt: 18792973.2
(22) Date de dépôt: 26.09.2018
(51) Int. Cl.: A23K 50/40, A23L 33/18

(54) **COMPOSITION APPETENTE COMPRENANT DE L'ALPHA-S1-CASEINE HYDROLYSEE**
APPETITANREGENDE ZUSAMMENSETZUNG MIT HYDROLYSIERTEM ALPHA-S1-CASEIN
APPETISING COMPOSITION COMPRISING HYDROLYSED ALPHA-S1-CASEIN

(30) Priorité: 03.10.2017 FR 1759250
(43) Date de publication de la demande: 12.08.2020
(73) Titulaire: Vetoquinol SA, 70200 Magny-Vernois (FR)
(72) Inventeur: MOREAU, Marinette, 70200 Saint-Germain (FR); BREVET, Aurélie, 70200 Lure (FR)
(74) Mandataire: Novagraaf Technologies
(86) Numéro de dépôt international: PCT/FR2018/052376
(87) Numéro de publication internationale: WO 2019/068989

(56) Documents cités:
- CN-B- 103 891 890
- JP-A- 2009 013 143
- US-A1- 2008 248 103
- DATABASE GNPD [Online] MINTEL; décembre 2013 (2013-12), Anonymous: "TPM chocolate", XP002779289, Database accession no. 2268322
- DATABASE GNPD [Online] MINTEL; mai 2009 (2009-05), Anonymous: "Premium chocolate", XP002779290, Database accession no. 1094791
- DATABASE GNPD [Online] MINTEL; avril 2011 (2011-04), Anonymous: "Immune booster and stress relief", XP002779291, Database accession no. 1517037
- DATABASE GNPD [Online] MINTEL; juillet 2012 (2012-07), Anonymous: "Calming dog supplement for dogs", XP002779292, Database accession no. 1841117
- DATABASE GNPD [Online] MINTEL; mai 2012 (2012-05), Anonymous: "Sleep aid", XP002779293, Database accession no. 1790337

## Description

### Domaine technique

La présente invention se rapporte à une nouvelle composition comprenant de l'alpha-s1-caséine hydrolysée, son procédé de fabrication et l'utilisation d'alpha-s1-caséine hydrolysée dans un complément alimentaire pour chats et chiens.

L'invention est définie par les revendications 1-4 attachées.

### Etat de la technique

Des compositions de type complément alimentaire à base d'hydrolysat de protéine de lait, appelée alpha-s1-caséine hydrolysée, sont connues. L'efficacité de l'alpha-s1-caséine hydrolysée pour aider à surmonter le stress a été prouvé par différentes études cliniques (CRSSA, 2001 et BIOFORTIS, 2011).

Toutes modifications de l'environnement de l'animal, telles que de nouvelles personnes dans leur entourage, les périodes de lactation, de sevrage ou encore un voyage, des feux d'artifice ou tout autre modification des habitudes de l'animal peuvent générer du stress chez celui-ci. Toutes ces situations stressantes peuvent être surmontées par l'animal grâce à l'administration de compositions comprenant de l'alpha-s1-caséine hydrolysée.

L'alpha-s1-caséine hydrolysée contenant un peptide bioactif aux propriétés relaxantes, l'alpha-casozépine, a été découverte par la société INGREDIA^{®} qui la commercialise sous le nom de LACTIUM^{®}. L'alpha-s1-caséine hydrolysée a d'abord été identifiée chez le bébé humain, en observant que le lait tout juste ingéré procurait chez les nouveaux nés apaisement et sérénité. Le système enzymatique du bébé permet, en effet, de libérer naturellement l'alpha-casozépine à l'origine de cet état lors de la digestion. Après des recherches, il a été possible de reproduire le mécanisme de digestion du bébé de par l'utilisation de l'enzyme digestive « trypsine » qui a permis d'isoler, à partir de la caséine, un hydrolysat de protéine de lait contenant le peptide bioactif alpha-casozépine.

Ainsi, il existe aujourd'hui une variété de produits commerciaux, tant à destination de l'homme que de l'animal, comprenant de l'alpha-s1-caséine hydrolysée.

Les compositions de l'art antérieur sont généralement des formes orales solides. On les trouve par exemple sous forme de gélules, comprimés ou bien encore de poudres.

L'alpha-s1-caséine hydrolysée est connue pour être un composé particulièrement sensible à l'humidité, se dégradant au contact de l'eau, en présence de protéines. Elle interagit en particulier avec les composés aminés d'origine animale, tels que les acides aminés ou les protéines d'origine animale. Ces dernières sont les composantes majoritaires des ingrédients dits « appétents » d'origine animale. Hormis, le lait dont elle est issue, l'alpha-s1-caséine hydrolysée présente ainsi une incompatibilité avec les ingrédients dits « appétents » d'origine animale ou contenant des protéines d'origine animale, généralement utilisés dans des compositions pour animaux tels que snacks, friandises ou bouchées.

L'alpha-s1-caséine hydrolysée est également, en particulier, incompatible avec les compositions contenant de l'eau et des protéines animales, ou les procédés de fabrication utilisant de l'eau et des protéines animales.

Aujourd'hui, seules des formes orales solides non-appétentes (c'est-à-dire ne comprenant pas d'ingrédient appétent) comprenant de l'alpha-s1-caséine hydrolysée, à une concentration supérieure à 1%, sont commercialisées, en particulier dans le domaine des compléments alimentaires vétérinaires.

Ces compositions orales solides (le plus souvent sous forme de comprimés ou de gélules), présentent l'inconvénient majeur d'être très difficilement acceptées par les animaux, en particulier par les chats ou les chiens (voir exemples 4 et 5). Ces formes orales solides et le produit qu'elles contiennent ont un goût et/ou une odeur neutre ne présentant aucun attrait pour l'animal. De plus, leur texture poudreuse les rend peu appétentes auprès des animaux.

Des compositions comprenant du lactium sont notamment connues de :
- DATABASE GNPD, TPM Chocolaté, décembre 2013 (2268322), une fiche technique décrivant une barre chocolatée comprenant moins de 1% de Lactium.
- DATABASE GNPD, Premium Chocolaté, mai 2009 (1094791), une fiche technique décrivant une barre chocolatée également comprenant du Lactium,
- DATABASE GNPD, Imune Booster and Stress Relief, avril 2011 (1517037), une fiche technique décrivant une boisson comprenant moins de 1,5% de Lactium,
- JP 2009 013143 A, une demande de brevet décrivant une composition pour améliorer le sommeil comprenant du Lactium et de nombreux excipients classiques tels que ceux décrits au paragraphe [0034],
- US 2008/248103, une demande de brevet décrivant des compositions pour améliorer le sommeil à base de mélatonine, de poudre de fleur de lavande et de Ferula, comprenant de faible quantité de lactium.
- DATABASE GNPD, Calming Dietary Supplement for Dogs, juillet 2012 (1841117), une fiche technique décrivant un complément alimentaire pour chien comprenant de l'alpha S1 caséine (a priori 72%), sans qu'il y soit fait mention d'hydrolysat d'alpha S1 caséine.
- DATABASE GNPD, Sleep aid, mai 2012, mai 2012 (1790337), décrivant une composition pour le sommeil comprenant du lactium.

Une solution peut être d'incorporer de l'alpha-s1-caséine hydrolysée dans des snacks, friandises ou bouchées pour animaux. De telles compositions, souvent riches en ingrédients appétents sont facilement acceptées par les animaux, en particulier par les chats ou les chiens. Cette solution présente néanmoins un inconvénient majeur.

La demanderesse a en effet démontré qu'il n'est aujourd'hui pas possible d'incorporer de l'alpha-s1-caséine hydrolysée dans une composition dite appétente sans en affecter la stabilité. Des compositions de type snack, friandise ou bouchée comprenant de l'alpha-s1-caséine hydrolysée ne sont actuellement pas satisfaisantes dans la mesure où, l'alpha-s1-caséine hydrolysée n'y est même pas stable pendant un mois (voir exemple 3).

Il existe donc aujourd'hui un réel besoin de fournir des compositions dites « appétentes » qui comprennent de l'alpha-s1-caséine hydrolysée, dans lesquelles la stabilité de l'alpha-s1-caséine hydrolysée est garantie sur une période prolongée, ceci afin de permettre de garantir également son efficacité, son stockage, son transport et sa conservation jusqu'à son point de vente, puis chez l'usager.

Il est du mérite de la demanderesse d'avoir développé une composition appétente destinée à être administrée oralement chez le chat ou le chien, comprenant de l'alpha-s1-caséine hydrolysée dans laquelle cette dernière est stable.

### Exposé de l'invention

La présente invention concerne ainsi une nouvelle composition comprenant de l'alpha-s1-caséine hydrolysée, selon la revendication 1.

En particulier, la composition selon l'invention peut se présenter sous la forme d'une composition orale solide, non poudreuse, à texture tendre et éventuellement malléable. La composition selon l'invention ne comprend pas d'excipient (en dehors de l'alpha-s1-caséine hydrolysée) contenant des protéines ou des acides aminés d'origine animale, telle que de la poudre de foie par exemple. La composition selon l'invention ne contient pas d'eau en dehors de celle apportée par les excipients et présente donc un taux d'humidité résiduelle relativement faible.

La composition selon l'invention ne comprend pas d'ingrédient d'origine animale, à l'exception de l'alpha-s1-caséine.

La teneur en protéines de la composition selon l'invention est inférieure à 30 % en masse par rapport à la masse totale de la composition. Cette teneur en protéines d'origine animale est uniquement due à l'alpha-s1-caséine hydrolysée.

La teneur en eau (taux d'humidité résiduelle) de la composition selon l'invention est inférieure ou égale à 11 % en masse par rapport à la masse totale de la composition, de préférence inférieure ou égale à 5 %. Cette teneur en eau est uniquement due à l'eau naturellement présente dans les différents ingrédients qui forment la composition. Aucune eau n'est ajoutée lors de la fabrication.

La composition selon l'invention, peut se présenter sous la forme d'une friandise, d'un snack ou d'une bouchée et présente une texture et un goût adaptés permettant une appétence élevée chez les animaux de compagnie, en particulier le chat ou le chien, tout en assurant une stabilité suffisante de l'alpha-s1-caséine hydrolysée.

En d'autres termes, il est du mérite de la demanderesse d'avoir mis au point une composition orale ayant une texture non poudreuse et éventuellement malléable et ayant en outre une appétence améliorée. Cette texture est adaptée pour augmenter l'appétence du produit chez l'animal, en particulier chez le chat ou le chien.

D'une façon surprenante, la nouvelle combinaison d'excipients employée dans la composition selon l'invention permet d'augmenter significativement l'appétence du produit sans pour autant impacter la stabilité de l'alpha-s1-caséine hydrolysée de manière négative.

Avantageusement, dans une composition selon l'invention, l'alpha-s1-caséine hydrolysée est stable pendant une période d'au moins 6 mois, de préférence d'au moins 9 mois ou d'au moins 12 mois, et de manière encore plus préférée d'au moins 18 mois.

En d'autres termes, après une période d'au moins 6 mois, de préférence d'au moins 9 mois ou d'au moins 12 mois, et de manière encore plus préférée d'au moins 18 mois, la composition selon l'invention comprend au moins 80% de la teneur théorique en alpha-s1-caséine hydrolysée revendiquée, de préférence au moins 95%. A titre de comparaison, une composition conventionnelle, dite appétente, comprenant de l'alpha-s1-caséine hydrolysée voit sa concentration en alpha-s1-caséine hydrolysée diminuée de près de 70% après seulement un mois (voir exemple 3).

Ainsi, la composition selon l'invention présente non seulement l'avantage, par rapport aux gélules comprenant de l'alpha-s1-caséine hydrolysée de l'état de la technique, d'être appétente, c'est-à-dire facilement acceptée par l'animal, en particulier par les chats ou les chiens ; mais aussi l'avantage, par rapport à une composition appétente de l'état de la technique à laquelle on ajouterait de l'alpha-s1-caséine hydrolysée, de présenter une stabilité nettement améliorée en ce qui concerne ladite alpha-s1-caséine hydrolysée.

L'invention concerne donc une composition orale solide, non poudreuse, à texture tendre et éventuellement malléable, comprenant :
- 1 à 25 % en masse d'un hydrolysat d'alpha-s1-caséine,
- 1 à 60 % en masse de glycérine,
- 1 à 20 % en masse d'huile de soja,
- 10 à 70% en masse d'un mélange d'amidon, de maltodextrine et de fibre de cellulose,
- 5 à 40 % en masse d'un arôme levure,
- 0,50 à 10 % d'un ester acétique de mono- et diglycérides,
- 0,10 à 5 % en masse d'extrait de tocophérol,
- 0, 05 à 1 % en masse de sorbate de potassium,
la somme des quantités en pourcentage (%) étant égale à 100 %.

La composition selon l'invention est caractérisée en ce qu'elle ne contient pas d'ingrédient ou excipient, en dehors de l'hydrolysat d'alpha-s1-caséine, contenant des protéines ou des acides aminés d'origine animale.

La composition selon l'invention ne comprend pas d'ingrédient d'origine animale, à l'exception de l'alpha-s1-caséine.

La composition selon l'invention a une teneur en protéines inférieure à 30% en masse, la totalité des protéines d'origine animale de la composition provenant de l'hydrolysat d'alpha-s1-caséine.

La composition selon l'invention a une teneur faible en eau, et présente donc un taux d'humidité résiduelle relativement faible, inférieur ou égal à 11% en masse par rapport à la masse totale de la composition, de préférence inférieur ou égal à 5%.

### Définitions

On entend par « alpha-s1-caséine », une protéine de lait constituée de 199 résidus d'acides aminés. Son hydrolyse trypsique libère l'alpha-casozépine, peptide bioactif aux propriétés relaxantes, anxiolytiques, agissant comme les benzodiazépines. L'alpha-s1-caséine hydrolysée est aussi appelée hydrolysat trypsique de caséine alpha-s1 (ou hydrolysat d'alpha-s1-caséine).

L'alpha-s1-caséine hydrolysée contient notamment l'alpha-casozépine de formule 1 suivante :

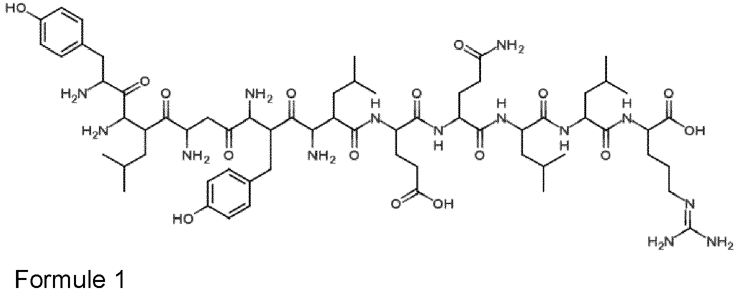

Avantageusement, l'alpha-s1-caséine hydrolysée est issue du lait. Il s'agit en particulier d'un hydrolysat trypsique de protéine de lait ou hydrolysat trypsique d'alpha-s1-caséine, tel que par exemple les produits commercialisés sous les noms de LACTIUM^{®}, par la société INGREDIA. Elle est titrée en α-casozépine, marqueur de l'activité du produit, mais qui n'en est pas responsable à 100% (les autres peptides présents dans l'hydrolysat ont également une activité).

Dans la composition selon l'invention, la concentration en hydrolysat d'alpha-s1-caséine est comprise entre 1 % et 25 % en masse, de préférence entre 5 % et 15 %, par rapport à la masse totale de la composition.

L'hydrolysat d'alpha-s1-caséine peut être un hydrolysat de protéine de lait. Il peut en particulier être le LACTIUM^{®}, commercialisé par la société INGREDIA.

On entend par « composition appétente », une composition orale (destinée à être administrée oralement chez l'animal) ayant une acceptabilité améliorée, de préférence ayant un pourcentage d'acceptabilité supérieur à 60 %, de préférence 70 %, chez le chien et 60 % chez le chat. Le calcul de l'acceptabilité est basé sur le pourcentage d'animaux ayant consommé le produit en entier lors d'un test de présentation.

On entend par « ingrédient appétent », un excipient, arôme ou composition aromatique d'origine synthétique ou naturelle végétale qui confère à la composition dans laquelle il est incorporé un caractère appétent. Dans le cadre de l'invention, les ingrédients appétents sont les agents de texture hydrophobes et/ou hydrophiles, les huiles, les arômes ne comprenant pas d'acides aminés ou de protéines d'origine animale. Certains ingrédients, comme les agents de texture ou les huiles, participent indirectement à l'appétence du produit en agissant sur la texture de la composition (sous forme de snacks, bouchées ou friandises).

On entend par « agent de texture », un additif ou ingrédient qui améliore la présentation et la tenue d'une composition pour la rendre plus attractive. Un agent de texture donne à la composition de la consistance tout en assurant la stabilité de l'ensemble. Il peut être hydrophile ou hydrophobe. L'hydrophobie est la propriété des groupements chimiques qui ont de la répulsion pour l'eau. Ce sont des groupements apolaires qui ne forment pas de ponts hydrogène avec l'eau. Inversement, l'hydrophilie caractérise des groupements chimiques qui ont de l'affinité avec l'eau. Ce sont des groupements ionisés (polaires) pouvant former des liaisons hydrogènes avec l'eau. Les propriétés hydrophiles ou hydrophobes des molécules jouent un rôle important dans les phénomènes d'auto-assemblage en milieux liquides. Les molécules amphiphiles possèdent à la fois un groupement hydrophobe et un groupement hydrophile. Les composés hydrophiles sont solubles dans l'eau mais pas dans les corps gras. Inversement les composés hydrophobes sont solubles dans les corps gras et insolubles dans l'eau. On les nomme parfois lipophiles.

Avantageusement, dans la composition selon l'invention, la concentration en agent de texture est comprise entre 0,5 % et 60 % en masse, de préférence 30 % à 50 % en masse, par rapport à la masse totale de la composition.

Les agents de texture sont la glycérine, et les esters acétiques des monoglycérides et diglycérides.

On entend par « agent de charge » ou « diluant », un additif ou ingrédient qui accroit le volume d'une composition. Un agent de charge sert à charger la préparation alimentaire, c'est-à-dire, à lui donner du volume. Dans le cadre de l'invention, l'agent de charge ou diluant ne comprend pas d'acides aminés ou de protéines d'origine animale. On entend par « acide aminé ou protéine d'origine animale », les protéines ou acides aminés issus de viandes, poissons et fruits de mer, oeufs ou produits laitiers.

Dans la composition selon l'invention, la concentration en agent de charge (ou diluant) est comprise entre 10 % et 70 % en masse, de préférence 20 % à 50 % en masse, par rapport à la masse totale de la composition.

L'agent de charge (ou diluant) un mélange d'amidon, de maltodextrine et de fibre de cellulose.

On entend par « huile végétale », un corps gras extrait d'une plante oléagineuse, c'est-à-dire une plante dont les graines, noix ou fruits contiennent des lipides.

On entend par « huile de synthèse », une huile obtenue par synthèse chimique (par exemple par un procédé de polymérisation, d'estérification ou d'alkylation) de composants tels que des oléfines, des composés aromatiques, des alcools, ou des acides.

On entend par « huile minérale », une huile extraite du pétrole brut par raffinage (ex : la paraffine alimentaire).

Dans la composition selon l'invention, la concentration en huile est comprise entre 1 % et 20 % en masse, de préférence 3 % à 7 % en masse, par rapport à la masse totale de la composition.

L'huile est une huile végétale.

L'huile est l'huile de soja.

On entend par « arôme synthétique, semi-synthétique ou d'origine naturelle végétale », tout produit ou substance destiné(e) à être ajouté(e) à des denrées alimentaires pour leur donner une odeur, un goût, ou une odeur et un goût ((CE) n°1334/2008 relatif aux arômes et à certains ingrédients alimentaires possédant des propriétés aromatisantes). Les arômes ne possèdent aucune qualité nutritive, mais jouent cependant un rôle essentiel. En effet, le goût et l'odeur d'une denrée sont les facteurs qui déterminent l'acceptation de celle-ci par un individu et stimule son appétit. Les arômes de synthèse sont produits, par voie synthétique, à partir de produits chimiques. Leur structure chimique et leurs propriétés physico-chimiques sont identiques à celles des arômes que l'on retrouve dans la nature. Les arômes n'existant pas dans la nature peuvent être une modification chimique d'un arôme naturel (ajout d'un groupement chimique, remplacement d'un atome par un autre : ce qui améliore les propriétés). On classe les arômes de synthèse en 3 catégories (arômes artificiels, arômes de transformation et arômes de fumée). Un arôme naturel végétal est, quant à lui, obtenu à partir de matière première végétale mais aussi grâce à des moyens physico-chimiques (à partir d'huiles essentielles par exemple). Un arôme naturel provenant d'une source aromatique doit contenir au moins 90% de cette source aromatique et 10% de produits naturels. Le produit fini donne donc un arôme entièrement naturel. Ce terme désigne le fait qu'il s'agisse d'une substance biologique mais qui a, cependant, subi un nombre limité de transformations (distillation, torréfaction, extraction à froid, fermentation, réactions enzymatiques, enfleurage). Dans le cadre de l'invention, l'arôme synthétique, semi-synthétique ou d'origine naturelle végétale ne comprend pas d'acides aminés ou de protéines d'origine animale.

Dans la composition selon l'invention, la concentration en arôme synthétique, semi-synthétique ou d'origine naturelle végétale, ne comprenant pas d'acides aminés ou de protéines d'origine animale, est comprise entre 5 % à 40 % en masse, de préférence de 10 % à 30 % en masse, par rapport à la masse totale de la composition.

L'arôme synthétique, semi-synthétique ou d'origine naturelle végétale, ne comprenant pas d'acides aminés ou de protéines d'origine animale est choisi dans le groupe comprenant les levures.

On entend par « antioxydant », une substance qui diminue ou empêche l'oxydation d'autres substances chimiques présente dans la composition.

Dans la composition selon l'invention, la concentration en antioxydant est comprise entre 0,1 % et 5 % en masse, de préférence de 0,2 % à 1 % en masse, par rapport à la masse totale de la composition.

L'antioxydant est un extrait de le tocophérol et ses dérivés (alpha tocophérol, D-alpha-tocophérol, DL-alpha-tocophérol, gamma tocophérol ou delta tocophérol).

On entend par « conservateur », une substance qui prolonge la durée de conservation des denrées alimentaires en les protégeant des altérations dues aux microorganismes et/ou qui les protègent contre la croissance de microorganismes pathogènes ((CE) n°1333/2008 relatif aux additifs alimentaires). On distingue des conservateurs organiques et des conservateurs inorganiques ou minéraux.

Dans la composition selon l'invention, la concentration en conservateur, de préférence en conservateur antimicrobien, est comprise entre 0,05 % à 1 % en masse, de préférence 0,1 % à 0,5 % en masse, par rapport à la masse totale de la composition.

Le conservateur est le sorbate de potassium.

La composition selon l'invention comprend :
- 1 à 25 % en masse d'un hydrolysat d'alpha-s1-caséine,
- 1 à 60 % en masse de glycérine,
- 1 à 20 % en masse d'huile de soja,
- 10 à 70% en masse d'un mélange d'amidon, de maltodextrine et de fibre de cellulose,
- 5 à 40 % en masse d'un arôme levure,
- 0,50 à 10 % d'un ester acétique de mono- et diglycérides,
- 0,10 à 5 % en masse d'extrait de tocophérol,
- 0, 05 à 1 % en masse de sorbate de potassium,
la somme des quantités en pourcentage (%) étant égale à 100 %.

L'invention concerne également un procédé ou une méthode de préparation de la composition selon la revendication 3.

Le procédé ou la méthode selon l'invention est caractérisé(e) en ce qu'il(elle) est mis(e) en oeuvre sans apport d'eau.

Le procédé ou la méthode de fabrication d'une composition selon l'invention comprend les étapes :
a) Dissolution du sorbate de potassium dans la glycérine pour obtenir une solution ou suspension 1,
b) Dissolution de l'extrait de tocophérol dans l'huile de soja, avec l'ester acétique de mono- et diglycérides, pour obtenir une solution ou suspension 2,
c) Mélange d'amidon, de maltodextrine, de fibre de cellulose, de l'arôme levure et de l'alpha-s1-caséine hydrolysée dans un mélangeur, de préférence à pâle ou à rubans ou dans un mélangeur par retournement, pour obtenir un mélange de poudres,
d) Mélange des solutions ou suspensions 1 et 2 avec le mélange de poudres obtenu à l'étape c), extrusion ou moulage et obtention de la composition.

Le procédé ou la méthode de fabrication d'une composition selon l'invention consiste en la succession des étapes a), b) c) et d) ci-dessous sans apport d'eau.

La composition selon l'invention est destinée à être administrée oralement.

L'invention consiste également en une utilisation d'un hydrolysat d'alpha-s1-caséine dans un complément alimentaire appétent pour chien ou chat selon la revendication 4.

Avantageusement, le complément alimentaire est une friandise, un snack ou une bouchée pour animaux, de préférence pour animaux de compagnie, de manière encore plus préférée pour le chat ou le chien.

Un mode de réalisation non revendiqué concerne également une composition selon l'invention destinée à être administrée oralement chez l'animal, en particulier chez le chat ou le chien.

Ainsi, un mode de réalisation non revendiqué concerne encore une composition selon l'invention pour son utilisation pour aider l'animal, en particulier le chien ou le chat, à surmonter les situations générant du stress et à retrouver un comportement équilibré, pour son utilisation dans la gestion et/ou la prévention du stress chez l'animal, de préférence le chien ou le chat.

Un mode de réalisation non revendiqué concerne en outre une utilisation d'une composition selon l'invention pour prévenir ou atténuer le stress chez l'animal, de préférence chez le chat ou le chien.

D'autres avantages pourront encore apparaître à l'homme du métier à la lecture des exemples ci-dessous, illustrés par les figures annexées, donnés à titre illustratif et non limitatif.

### Brève description des figures

- La figure 1 représente l'évolution de la teneur en alpha-s1-caséine hydrolysée en pourcentage (%) de la composition A en fonction du temps (mois) stockées en sachets aluminium à 30°C et 65% d'humidité relative.
- La figure 2 représente l'évolution de la teneur en alpha-s1-caséine hydrolysée en pourcentage (%) de la composition A, contre-exemple, et de la composition 1, selon l'invention, en fonction du temps (mois), stockées en sachets aluminium à 30°C et 65% d'humidité relative.

### EXEMPLES

### EXEMPLE 1 : Procédés de fabrication de compositions selon l'invention

La composition 1 a été préparée indifféremment selon les procédés décrits dans l'option 1 ou l'option 2 ci-dessous.

### Option 1 :

I / Préparation d'une solution ou d'une suspension 1 : solubilisation du ou des conservateur(s) (ex : sorbate de potassium) dans le ou les agent(s) de texture hydrophile(s) (ex : glycérine) :
   - Dans un récipient adapté, le ou les agent(s) de texture et le ou les conservateur(s) sont mélangés, à température ambiante, à l'aide d'un mélangeur type Rayneri équipé d'une pâle défloculeuse. L'agitation est maintenue jusqu'à l'obtention d'une solution ou d'une suspension homogène.
II / Préparation d'une solution ou d'une suspension 2 : huiles (ex : huile de soja) et agent(s) de texture hydrophobe(s) (ex : ester acétique des monoglycérides et diglycérides) et antioxydant(s) (ex : extrait de tocophérol) :
   - Dans un récipient adapté, la ou les huile(s) (ex : l'huile de soja), le ou les agent(s) de texture hydrophobe(s) (si nécessaire) et le ou les antioxydant(s) (ex : extrait de tocophérol) sont mélangés, à température ambiante, à l'aide d'un mélangeur type Rayneri équipé d'une pâle sous forme d'hélice jusqu'à l'obtention d'une solution ou d'une suspension homogène.
III / Préparation du mélange de poudres :
   - Dans un mélangeur à pâle ou à rubans ou dans un mélangeur par retournement, le ou les agent(s) de charge ou diluant(s) (ex : amidon, fibre de cellulose, maltodextrine), l'alpha-s1-caséine hydrolysée, le ou les arômes (ex : levure), les éventuels autres excipients (ex : colorant) sont incorporés, à température ambiante, puis mélangés.
      Le mélange de poudres est homogène et sans agglomérats.
IV/ Fabrication des snacks, friandises ou bouchées par extrusion :
   - Le mélange de poudres à extruder est introduit dans l'extrudeur via la station de chargement : la cuve de mélange de poudre vrac est placée sur la station de chargement de l'extrudeur. Un système de vis alimente automatiquement l'extrudeur. En parallèle, les solutions ou suspensions 1 et 2 sont introduites dans l'extrudeur grâce à des pompes doseuses. Les réglages des pompes doseuses doivent être définis afin de garantir l'homogénéité des snacks, bouchées ou friandises obtenus.
   - La vis ou les doubles vis de l'extrudeur malaxent et entrainent l'extrudât vers la filière de sortie. L'extrudât en sortie de machine doit être homogène en termes d'aspect et de couleur, malléable et modelable. Par la suite l'extrudât est acheminé sur un tapis pour être découpé aux dimensions souhaitées.
   - Les extrudâts découpés sont conditionnés dans des sachets.

### Option 2 :

I / Préparation d'une solution ou d'une suspension 1 : solubilisation du ou des conservateur(s) (ex : sorbate de potassium) dans le ou les agent(s) de texture hydrophile(s) (ex : glycérine) :
   - Dans un récipient adapté, le ou les agent(s) de texture et le ou les conservateur(s) sont mélangés, à température ambiante, à l'aide d'un mélangeur type Rayneri équipé d'une pâle défloculeuse. L'agitation est maintenue jusqu'à l'obtention d'une solution ou d'une suspension homogène.
II / Préparation d'une solution ou d'une suspension 2 : huiles (ex : huile de soja) et agent(s) de texture hydrophobe(s) (ex : ester acétique des monoglycérides et diglycérides) et antioxydant(s) (ex : extrait de tocophérol) :
   - Dans un récipient adapté, la ou les huile(s) (ex : l'huile de soja), le ou les agent(s) de texture hydrophobe(s) (si nécessaire) (ex : ester acétique des monoglycérides et diglycérides) et le ou les antioxydant(s) (ex : extrait de tocophérol) sont mélangés, à température ambiante, à l'aide d'un mélangeur type Rayneri équipé d'une pâle sous forme d'hélice jusqu'à l'obtention d'une solution ou d'une suspension homogène.
III / Préparation du mélange de poudres :
   - Dans un mélangeur planétaire ou dans un mélangeur à pâles, à température ambiante, le ou les agent(s) de charge ou diluant(s) (ex : amidon, fibre de cellulose, maltodextrine), l'hydrolysat d'alpha-s1-caséine, le ou les arômes (ex : levure), et les éventuels autres excipients (ex : colorant) sont mélangés. Le mélange de poudres obtenu est homogène et sans agglomérats.
IV / Préparation de la pâte à extruder ou à mouler :
   - Dans un mélangeur planétaire ou dans un mélangeur à pâles, la solution ou suspension 2 est incorporée sous agitation à l'aide d'une pompe péristaltique sur le mélange de poudres en mouvement.
      Le mélange obtenu est homogène en termes d'aspect et de couleur.
   - Par la suite, la solution ou suspension 1 est incorporée à l'aide d'une pompe péristaltique sur le mélange précédent, en maintenant l'agitation, puis l'ensemble est malaxé jusqu'à l'obtention d'une pâte.
      La pâte obtenue est malléable et modelable, homogène en termes d'aspect et de couleur.
V / Fabrication des snacks, friandises ou bouchées :
   - Par extrusion :
      ∘ L'extrudeur est chargé de façon constante et régulière avec la pâte obtenue ci-dessus. Ce mélange pâteux est acheminé grâce à une vis vers la filière de sortie.
      ∘ L'extrudât en sortie de machine doit être homogène en termes d'aspect et de couleur, malléable et modelable. Les extrudâts sont acheminés sur un tapis vers le système de découpe pour être découpés aux dimensions définies avant d'être conditionnés dans des sachets ou des piluliers.
   - Par moulage de la pâte aux dimensions et poids de snacks, friandises ou bouchées souhaités puis conditionnement en sachets ou en piluliers.

On obtient la composition 1.

**Tableau 1 : Composition 1**

| **COMPOSITION 1** | **Formule centésimale (%)** |
|---|---|
| Lactium^{®} (hydrolysat d'alpha-s1-caséine) | 5,00 |
| Glycérine | 22,10 |
| Ester acétique des monoglycérides et diglycérides | 4,40 |
| Huile de soja | 4,40 |
| Amidon | 26,00 |
| Fibre de cellulose | 17,00 |
| Levure | 15,00 |
| Maltodextrine | 5,50 |
| Extrait de tocophérol | 0,40 |
| Sorbate de Potassium | 0,20 |
| **TOTAL** | **100,00** |
| **Pourcentage d'eau ajoutée au cours de la fabrication** | **0,00** |

### EXEMPLE 3 : Contre-exemple - test de stabilité

### Exemple 3A : contre-exemple

La composition A est préparée selon le procédé de l'option 1 ou l'option 2, décrite dans l'exemple 1.

**Tableau 5 : Composition A**

| **COMPOSITION A** | **Formule centésimale (%)** |
|---|---|
| Lactium^{®} | 6,51 |
| Glycérine | 22,04 |
| Ester acétique des monoglycérides et diglycérides | 4,41 |
| Huile de soja | 4,41 |
| Amidon | 18,64 |
| Poudre de foie | 43,59 |
| Extrait de tocophérol | 0,40 |
| **TOTAL** | **100,00** |
| **Pourcentage d'eau ajoutée au cours de la fabrication** | **12,00** |

### Exemple 3B : test de stabilité comparée

Un test de stabilité est ensuite réalisé sur les compositions 1 et A. Les friandises, snacks ou bouchées conditionnés en sachets aluminium sont conservés à 30°C et 65% d'humidité relative pendant plusieurs mois.

L'impact de la combinaison des excipients employés sur la stabilité de l'alpha-s1-caséine hydrolysée a été évalué. D'une façon surprenante, la nouvelle combinaison d'excipients employée n'impacte pas négativement sa stabilité.

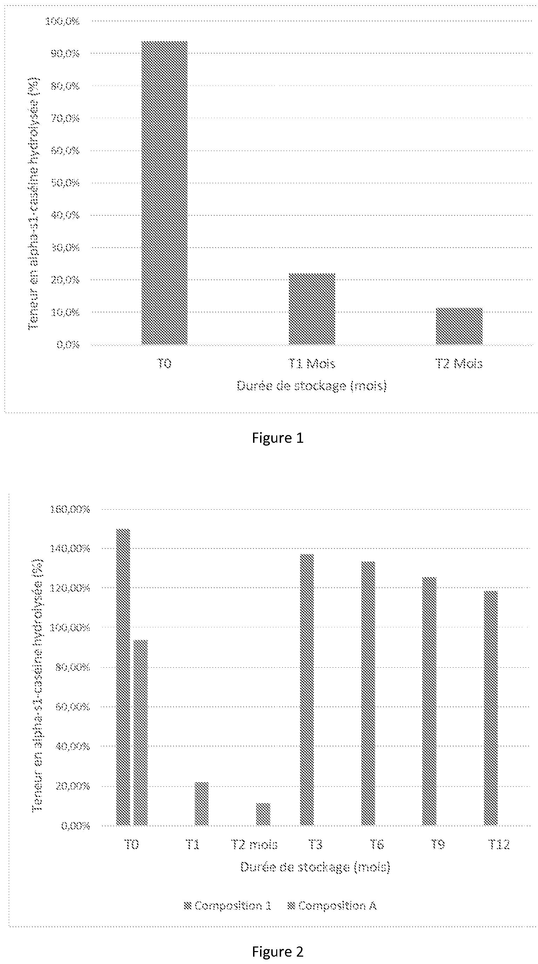

La figure 1 montre l'évolution de la teneur en alpha-s1-caséine hydrolysée en % de la composition A en fonction du temps (mois) stockée en sachets aluminium à 30°C/65% d'humidité relative.

La figure 2 montre l'évolution de la teneur en alpha-s1-caséine hydrolysée en % des compositions A, contre-exemple, et 1, selon l'invention en fonction du temps (mois), stockées en sachets aluminium à 30°C/65% d'humidité relative.

La composition 1 selon l'invention montre que la teneur en alpha-s1-caséine hydrolysée ne diminue presque pas sur une période de 12 mois, tandis que dans la composition A, il n'y a quasiment plus d'alpha-s1-caséine hydrolysée dans la composition après une durée de deux mois.

### EXEMPLE 4 : Tests d'appétence chez le chat

Un test d'appétence a été conduit pour évaluer l'appétence des bouchées, snacks ou friandises sur des chats de poids et de races différents.

Ainsi, un test d'appétence spécifique aux friandises, snacks, bouchées a été réalisé auprès de trente-sept chats adultes, mâles et femelles. Au cours de cette évaluation, 1 snack a été présenté à chaque chat.

Pour chaque animal, deux critères ont été relevés :
- la préhension : à la main, au sol ou absence de prise,
- la consommation du produit : partielle, totale ou absence de consommation.

Enfin, le calcul de l'acceptabilité est basé sur le pourcentage de chats ayant consommé le produit en entier.

La préhension est excellente étant donné que 97% des chats ont pris le snack dont 86% à la main. Le niveau d'acceptabilité est de 84%.

Pour le même test, réalisé avec les gélules conventionnelles auprès de trente-deux chats adultes, mâles et femelles, le niveau d'acceptabilité n'est que de 12% avec uniquement 19 % de préhension à la main (44% ont pris la gélule en deuxième présentation (au sol)).

### EXEMPLE 5 : Tests d'appétence chez le chien

Le même test a été reproduit auprès de trente-six chiens adultes, mâles et femelles, de différentes races et poids. Une bouchée a été présentée à chaque chien.

Il s'agit d'un test monadique réalisé sur une journée et mené dans des boxes individuels pendant dix minutes pour chaque chien. Pour chaque animal, deux critères ont été relevés : la préhension (à la main, au sol ou absence de prise) et la consommation (partielle, totale ou absence de consommation). Enfin, le calcul de l'acceptabilité est basé sur le pourcentage de chiens ayant consommé le produit en entier
La préhension est parfaite étant donné que 100% des chiens ont pris le comprimé, dont 86% à la main. Le niveau d'acceptabilité est de 97%.

Pour le même test, réalisé avec les gélules conventionnelles, le niveau d'acceptabilité est de 68% avec uniquement 49 % de préhension à la main. Pour la composition orale décrite dans ce brevet la préhension était de 86% de prise à la main.

L'impact de la combinaison des excipients employés sur l'appétence ainsi que sur la stabilité de l'alpha-s1-caséine hydrolysée a été évalué au travers des différents exemples présentés ci-dessus.

D'une façon surprenante, la nouvelle combinaison d'excipients employée permet d'augmenter significativement l'appétence du produit sans impacter négativement sa stabilité.

## Revendications

1. Composition comprenant :
- 1 à 25 % en masse d'un hydrolysat d'alpha-s1-caséine,
- 1 à 60 % en masse de glycérine,
- 1 à 20 % en masse d'huile de soja,
- 10 à 70% en masse d'un mélange d'amidon, de maltodextrine et de fibre de cellulose,
- 5 à 40 % en masse d'un arôme levure,
- 0,50 à 10 % d'un ester acétique de mono- et diglycérides,
- 0,10 à 5 % en masse d'extrait de tocophérol,
- 0, 05 à 1 % en masse de sorbate de potassium,
la somme des quantités en pourcentage (%) étant égale à 100 %.

2. Composition selon la revendication 1, dans laquelle l'hydrolysat d'alpha-s1-caséine est hydrolysat trypsique d'alpha-s1-caséine.

3. Procédé de fabrication d'une composition la revendication 1 ou 2 comprenant les étapes :
a) Dissolution du sorbate de potassium dans la glycérine pour obtenir une solution ou suspension 1,
b) Dissolution de l'extrait de tocophérol dans l'huile de soja, avec l'ester acétique de mono- et diglycérides, pour obtenir une solution ou suspension 2,
c) Mélange d'amidon, de maltodextrine, de fibre de cellulose, de l'arôme levure et de l'hydrolysat d'alpha-s1-caséine dans un mélangeur, de préférence à pâle ou à rubans ou dans un mélangeur par retournement, pour obtenir un mélange de poudres,
d) Mélange des solutions ou suspensions 1 et 2 avec le mélange de poudres obtenu à l'étape c), extrusion ou moulage et obtention de la composition,
ledit procédé étant mis en oeuvre sans apport d'eau.

4. Utilisation de la composition selon la revendication 1 ou 2 comme complément alimentaire pour chien ou chat.

## Patentansprüche

1. eine Zusammensetzung bestehend aus:
- 1 bis 25 Gew.-% eines Alpha-s1-Kasein-Hydrolysats,
- 1 bis 60 Gew.-% Glyzerin,
- 1 bis 20 Massenprozent Sojaöl,
- 10 bis 70 Gew.-% einer Mischung aus Stärke, Maltodextrin und Zellulosefasern,
- 5 bis 40 Gew.-% eines Hefearomas,
- 0,50 bis 10 Gew.-% eines Essigsäureesters von Mono- und Diglyceriden,
- 0,10 bis 5 Gew.-% Tocopherol-Extrakt,
- 0,05 bis 1 Gewichtsprozent Kaliumsorbat,
die Summe der prozentualen Mengen (%) ist gleich 100%.

2. eine Zusammensetzung nach Anspruch 1, wobei das alpha-s1-Kasein-Hydrolysat alpha-s1-Kasein-Trypsin-Hydrolysat ist.

3. ein Verfahren zur Herstellung einer Zusammensetzung nach Anspruch 1 oder 2, dass die folgenden Schritte umfasst:
a) Auflösen von Kaliumsorbat in Glycerin zur Herstellung einer Lösung oder Suspension 1,
b) Auflösen des Tocopherol-Extrakts in Sojaöl mit dem Essigsäureester von Mono- und Diglyceriden, um eine Lösung oder Suspension 2 zu erhalten,
c) Mischen von Stärke, Maltodextrin, Cellulosefasern, Hefearoma und Alpha-s1-Caseinhydrolysat in einem Mixer, vorzugsweise einem Paddel- oder Bandmixer oder in einem Inversionsmixer, um eine Pulvermischung zu erhalten,
d) Mischen der Lösungen oder Suspensionen 1 und 2 mit der in Schritt c) erhaltenen Pulvermischung, Extrusion oder Formung und Gewinnung der Zusammensetzung,
Dieses Verfahren wird ohne Zugabe von Wasser durchgeführt.

4. Verwendung der Zusammensetzung nach Anspruch 1 oder 2 als Nahrungsergänzungsmittel für Hunde oder Katzen.

## Claims

1. A composition comprising:
- 1 to 25% by weight of an alpha-s1-casein hydrolysate,
- 1 to 60% by weight of glycerine,
- 1 to 20% by mass of soya oil,
- 10 to 70% by weight of a mixture of starch, maltodextrin and cellulose fibre,
- 5 to 40% by weight of a yeast flavouring,
- 0.50 to 10% by weight of an acetic ester of mono- and diglycerides,
- 0.10 to 5% by weight of tocopherol extract,
- 0.05 to 1% by weight potassium sorbate,
the sum of the percentage quantities (%) being equal to 100%.

2. A composition according to claim 1, wherein the alpha-s1-casein hydrolysate is alpha-s1-casein trypsin hydrolysate.

3. A method of making a composition of claim 1 or 2 comprising the steps:
a) Dissolving potassium sorbate in glycerine to obtain a solution or suspension 1,
b) Dissolving the tocopherol extract in soya oil, with the acetic ester of mono- and diglycerides, to obtain a solution or suspension 2,
c) Mixing starch, maltodextrin, cellulose fibre, yeast flavouring and alpha-s1-casein hydrolysate in a blender, preferably a paddle or ribbon blender or in an inversion blender, to obtain a powder mixture,
d) Mixing the solutions or suspensions 1 and 2 with the powder mixture obtained in step c), extrusion or moulding and obtaining the composition,
said process being carried out without the addition of water.

4. Use of the composition according to claim 1 or 2 as a food supplement for dogs or cats.
